# EUROPEAN PATENT SPECIFICATION

(11) **EP 2 223 962 B1**
(45) Date of publication and mention of the grant of the patent: **29.02.2012**
(21) Application number: 08856585.8
(22) Date of filing: 05.12.2008
(51) Int. Cl.: C08L 23/10, C08L 23/26, C08L 83/04

(54) **ANTIFOULING POLYPROPYLENE RESIN COMPOSITION, AND HOUSING FOR HOUSEHOLD ELECTRIC APPLIANCE AND TOILET SEAT COMPRISING THE SAME**
ANTIFOULING POLYPROPYLENHARZZUSAMMENSETZUNG, UND GEHÄUSE FÜR HAUSHALTSELEKTROGERÄT UND TOILETTENSITZ , DIE DIESE ENTHALTEN.
COMPOSITION RÉSINE POLYOÈFINIQUE ANTI-SALISURE, ET BOÎTER D'APPAREIL MÉNAGER ÉLECTRIQUE ET SIÈGE DE TOILETTES LA COMPRENANT

(30) Priority: 07.12.2007 JP 2007316896; 10.12.2007 JP 2007318129
(43) Date of publication of application: 01.09.2010
(73) Proprietor: Panasonic Corporation, Kadoma-shi Osaka 571-8501 (JP)
(72) Inventor: SANO, Mitsuhiro, Chuo-ku, Osaka-shi, Osaka 540-6207 (JP); OHSHIRO, Satoshi, Chuo-ku, Osaka-shi, Osaka 540-6207 (JP)
(74) Representative: Schwabe - Sandmair - Marx
(86) International application number: PCT/JP2008/003619
(87) International publication number: WO 2009/072299

(56) References cited:
- JP-A- 63 101 428
- JP-A- 2000 279 345
- JP-A- 2002 322 367
- US-A- 5 304 227
- US-A1- 2006 168 715

## Description

### [Technical Field]

The present invention relates to an antifouling polypropylene resin composition capable of imparting an antifouling property to surfaces of housings for household electric appliances, and toilet seats.

### [Background Art]

Conventionally, as a method for imparting an antifouling property to resins, a method of kneading a substance having water repellency and oil repellency such as a silicone compound or a fluorine compound into a resin, a method of subjecting to surface coating with a silicone based paint or the like, a method of carrying out surface modification with a fluorine based monomolecular film, a method of adhering a resin film having a low surface energy such as a fluorine resin onto a resin surface, or the like has been carried out.

Patent Document 1 discloses an antifouling resin composition having favorable dispersibility, and being superior in durability obtained by adding to a resin to be a parent phase a silicone resin prepared by graft polymerization of a resin that has favorable compatibility with the resin to be the parent phase. In addition, Patent Document 2 discloses a resin composition prepared by blending a fluorine-containing compound having a perfluoroalkyl group with a resin to serve as a parent phase to increase the content of fluorine of the fluorine-containing compound, by which the surface free energy is lowered to improve the antifouling property since the perfluoroalkyl group becomes more likely to be orientated toward the resin surface which is to serve as the parent phase. Moreover, Patent Document 3 discloses a method for forming an antifouling coated film on the surface of an underwater structure using a urethane based paint containing a silicone component. Furthermore, Patent Document 4 attains a toilet seat having an improved antifouling property by providing a low surface energy layer (film) such as a silicone resin or a fluorine resin on a toilet seat surface.
Patent Document 1: JP-A No. 2000-279345
Patent Document 2: Japanese Patent No. 3,411,054
Patent Document 3: JP-A No. 2006-45339
Patent Document 4: Japanese Patent No. 3,838,371

### [DISCLOSURE OF THE INVENTION]

### [Problems that the Invention is to Solve]

According to the aforementioned Prior Arts, for example, in Patent Document 1, the silicone resin added to the resin hardly exists in proximity to the composition surface, leading to a problem of inferior antifouling property. Additionally, when the content of the silicone resin is increased in order to improve the antifouling property, a problem of alteration of mechanical physical properties of the resin to serve as a parent phase occurs. In Patent Document 2, orientation of the perfluoroalkyl group towards the parent phase resin surface is insufficient, leading to a problem of an inferior antifouling property, and also a problem of concern about being a substance worried about influences on living bodies has raised since a part of substances containing a perfluoroalkyl group has a high accumulation potential in living bodies. Moreover, in Patent Document 3, steps of painting, drying, and curing are required, and thus a problem of high processing cost has been raised. Patent Document 4 has involved a problem that the antifouling coated film obtained by casting of a resin film with a substrate results in weak adhesiveness when the substrate is a polypropylene resin, and in particular, detachment occurs from a cut when exists. Furthermore, when the resin film is a fluorine resin film, oily components infiltrate, and a problem of causing yellow staining also occurs when left to stand for a long period of time.

### [Means for Solving the Problem]

The present invention solves the foregoing problems, and one aspect of the invention provides an antifouling polypropylene resin composition comprising a polypropylene resin, a silicone oil having a polar group, a compatibilizing agent that improves compatibility between the silicone oil having a polar group and the polypropylene resin, wherein the silicone oil having a polar group is dispersed in the polypropylene resin. Although silicone oils are primarily less likely to admix with polypropylene resins, introduction of a polar group into a part of a silicone oil enables the polar group of the silicone oil to admix with the polypropylene resin by way of a compatibilizing agent; therefore, an antifouling polypropylene resin composition having a superior antifouling property can be attained by the presence of the silicone oil in the vicinity of the surface of articles molded from the polypropylene resin composition since the silicone oil is finely dispersed in the polypropylene resin.
Furthermore, another aspect of the present invention provides a housing for a household electric appliance which comprises an area manufactured by molding with the antifouling polypropylene resin composition. The housing for a household electric appliance may be manufactured such that the entire area is molded with the composition, or that only a partial area is molded with the composition whereas the remaining area is molded with a different composition. Thus, rice cookers, electric water heaters and the like having a superior antifouling property can be provided which are less likely to be adhered with stains derived from foods such as coffee, tea, and bean paste soup, and even though adhered, removal of the stain can be easily executed.

In addition, still another aspect of the present invention provides a toilet seat having an area manufactured by molding with the antifouling polypropylene resin composition. Toilet seats, particularly warm water cleaning toilet seats are composed of a toilet lid, a toilet seat part, and a main body portion. The toilet seat may be manufactured such that the entire area is molded with the composition, or that only a partial area is molded with the composition and the remaining area is molded with a different composition. It is preferred that the areas likely to be adhered with stains, such as the inferior face of the toilet seat part, the bottom plate of the main body portion and the like, are composed by molding with the aforementioned antifouling polypropylene resin composition. In particular, the splashing of urine and the like may spatter onto the inferior face (back face) of the toilet seat part; however, according to the toilet seat of the present invention, stains can be easily removed with dry toilet tissue paper, and thus an effect of saving labor for cleaning can be achieved. In addition, even when urine and the like adhered to the inferior face of the toilet seat part is left to stand without being wiped off, and thus dried to result in sticking of the stain, an effect of capable of easily removing the stain with a light force is achieved.

### [Effects of the Invention]

According to the present invention, an antifouling polypropylene resin composition that exhibits a high degree of antifouling property can be provided.

### [Brief Description of the Drawings]

Fig. 1 shows a schematic cross-sectional view illustrating an antifouling polypropylene resin composition in a first Embodiment of the present invention;
Fig. 2 shows a schematic cross-sectional view illustrating an antifouling polypropylene resin composition in a second Embodiment of the present invention;
Fig. 3 shows a schematic outline view illustrating a western-style toilet in a third Embodiment of the present invention; and
Fig. 4 shows a schematic cross-sectional view illustrating Comparative Example in which only a polar group-containing silicone oil was added to a polypropylene resin.

### [Description of Reference Numerals and Signs]

- 1: polypropylene resin
- 2: modified polypropylene resin
- 3: polar group-containing silicone oil
- 4: stain
- 5: polypropylene resin
- 6: modified polypropylene resin
- 7: polar group-containing silicone oil
- 8: unreacted polar group-containing silicone oil
- 9: stain
- 21: toilet seat part
- 22: lavatory bowl
- 23: toilet lid
- 24: main body portion
- 31: polypropylene resin
- 32: polar group-containing silicone oil
- 33: stain

### [Best Mode for Carrying Out the Invention]

The antifouling polypropylene resin composition of the present invention contains a polypropylene resin as a base resin. The polypropylene resin is a polymer formed by polymerization of propylene, and widely employed as general-purpose plastics for molding processing.
The antifouling polypropylene resin composition of the present invention comprises a silicone oil having a polar group as a component that exerts an antifouling property, and a compatibilizing agent that improves compatibility between the silicone oil and the polypropylene resin as a base resin.
As the silicone oil having a polar group, specifically, a modified silicone oil having a polar group is exemplified. The modified silicone oil is preferred since it enables an inexpensive antifouling polypropylene resin composition to be readily obtained due to its low cost and favorable availability. The silicone oil herein referred to means a polymer that has a low molecular weight and is composed of a dimethyl polysiloxane structure, and exhibits a liquid state at an ordinary temperature (20°C). The modified silicone oil refers to a silicone oil prepared by substituting a part of methyl groups of dimethyl polysiloxane with the polar group described above. For this purpose, a commercially available modified silicone oil may be used.
In the present invention, not a silicone resin that exhibits a solid state at an ordinary temperature, but a silicone oil is used. Since a silicone oil has a lower melting point than a polypropylene resin, it can be easily dispersed in a propylene resin during kneading and/or molding, and thus a sufficient antifouling effect can be exerted. On the other hand, since a silicone resin generally has a higher melting point than a polypropylene resin, it is not melted during kneading and/or molding to form large blocks in the polypropylene resin and fail to disperse sufficiently, and thus a satisfactory antifouling effect cannot be exerted. Furthemore, since the silicone oil has a high fluidity in a resin composition, a phenomenon of migration of the silicone component toward the molded product surface occurs. Therefore, proportion of the silicone component that exists on the molded product surface increases, and a high degree of antifouling property and abrasion resistance can be thereby achieved.
The polar group refers to an organic group in which polarization occurs due to an atom having high electronegativity such as oxygen, sulfur, nitrogen or halogen. Specific examples of the polar group include an amino group, epoxy group, carboxyl group, carbinol group, methacryl group, mercapto group, phenol group, and the like.
The polar group is preferably selected such that a reaction with a reactive group carried by the compatibilizing agent is allowed. For example, when the compatibilizing agent has a carboxylic anhydride group, the polar group is preferably a group that is alkaline, and particularly preferably an amino group. Namely, when the compatibilizing agent is a carboxylic anhydride modified polypropylene resin, the silicone oil having a polar group is preferably an amino modified silicone oil.
Although there are several types of the modified silicone oil having a polar group such as: double end type in which a polar group was introduced into both ends of a straight polysiloxane structure; one end type in which a polar group was introduced into only one end of a straight polysiloxane structure; and side chain type in which a polar group was introduced into a side chain of a straight polysiloxane structure, any one of these may be used in the present invention. However, side chain type modified silicone oils having a large number of polar groups at their side chains are likely to react with a compatibilizing agent, and thus can improve the effect of the invention even though a small amount of the compatibilizing agent is blended. Also, side chain type amino modified silicone oils are desired since they are inexpensive and readily available.

Although the content of the polar group-containing silicone oil in the antifouling polypropylene resin composition of the present invention may be determined ad libitum depending on a desired antifouling property and the type of the compatibilizing agent, it is preferably about 1 to 10% by mass relative to the total amount of the composition. More desirably, the content is about 2 to 8% by mass. When the content is too low, the antifouling effect is inferior, where as when the content is too high to the contrary, mechanical physical properties such as rigidity, impact resistance and the like of the polypropylene resin composition may be deteriorated.

The compatibilizing agent in the present invention is a component that improves compatibility between the polar group-containing silicone oil and the polypropylene resin. Specific examples include modified polypropylene resins, modified polyethylene resins, modified polystyrene resins, and the like, and among them, a modified polypropylene resin can be preferably used. Since a main constituent element of the modified polypropylene resin is a polypropylene resin, it is likely to admix with a polypropylene resin employed to be a base resin that constitute the composition of the present invention. In addition, since the modified moiety is likely to admix also with the polar group of the silicone oil, the polypropylene resin and the polar group-containing silicone oil can be easily compatibilized.

The modified polypropylene resin is not particularly limited, and polypropylene resins into which a reactive group was introduced, polypropylene resins modified with fluorine or silicone, and the like may be exemplified. The same is applied to modified polyethylene resins, and modified polystyrene resins. Commercially available products can be used as the modified polypropylene resin and the like. Examples of the reactive group which can be carried by the modified polypropylene resin, etc., include acid groups such as carboxylic anhydride groups such as a maleic anhydride group, carboxylic acid groups such as an oleic acid group and linoleic acid group, as well as an amino group, an epoxy group, a silanol group, and the like. When the modified polypropylene resin is allowed to react with the polar group-containing silicone oil while kneading with the polypropylene resin, the modified polypropylene resin having a carboxylic anhydride group is preferred because this carboxylic anhydride modified polypropylene resin is safe, inexpensive, and available comparatively easily.

The content of the compatibilizing agent in the antifouling polypropylene resin composition of the present invention may be determined ad libitum depending on a desired antifouling property and the type of the polar group-containing silicone oil, and is preferably about 0.1 to 5% by mass relative to the total amount of the composition. More desirably, the content is about 0.3 to 2.0% by mass. When the content is too low, the antifouling effect is inferior, where as when the content is too high to the contrary, an unreacted reactive group included in the compatibilizing agent may be a cause of adhesion of stains, and thus the antifouling property may be deteriorated by contraries.
The blend ratio of the polar group-containing silicone oil to the compatibilizing agent is 2.5:1 to 7.5:1 by mass ratio for the purpose of achieving a high degree of antifouling property. The most preferred blend ratio is about 5:1.

According to suitable mode of the present invention: the polar group-containing silicone oil is an amino modified silicone oil; the compatibilizing agent is an acid modified polypropylene resin; and the antifouling polypropylene resin composition of the present invention contains these two components in the state being bound by a chemical reaction with each other, and also contains the aforementioned amino modified silicone oil in an unreacted state. Thus binding of the polar group-containing silicone oil with the modified polypropylene resin enables dispersibility of the polar group-containing silicone oil in the polypropylene resin employed as a base resin to be improved. Furthermore, the unreacted modified silicone oil enters into the polar group-containing silicone oil bound to the modified polypropylene resin to result in covering of the vicinity of the surface of the antifouling polypropylene resin composition, and thus a polypropylene resin composition having a high degree of antifouling property can be attained. In this process, the acid modified polypropylene resin is preferably a carboxylic anhydride modified polypropylene resin, whereas the amino modified silicone oil is preferably a side chain type amino modified silicone oil.

It is preferred that the antifouling polypropylene resin composition of the present invention further contains an antimicrobial agent. Accordingly, an antimicrobial property can be imparted in addition to the antifouling property; therefore, when applied to toilet seats and the like in particular, clean toilet seats having both an antimicrobial property and an antifouling property can be provided. Examples of the antimicrobial agent include organic antimicrobial agents such as a Japanese horseradish component (allyl isothiocyanate), and inorganic antimicrobial agents such as silver, zinc, copper based agents and the like. However, since it is possible that the organic antimicrobial agent may be deteriorated due to the heat applied in kneading with the polar group-containing silicone oil, the compatibilizing agent and the polypropylene resin, an inorganic antimicrobial agent is preferably used in the present invention. Examples of the inorganic antimicrobial agent include a silver based inorganic antimicrobial agent "Novaron" (registered trademark) manufactured by Toa Gosei Co., Ltd., an inorganic antimicrobial agent "Zeomic" manufactured by Sinanen Zeomic Co., Ltd., a silver based inorganic antimicrobial agent "Bactekiller" (registered trademark) manufactured by Fuji Chemical Industries, Ltd., and the like, for which fungicidic effects can be also expected. The antimicrobial agent is not limited to these products, and any agent is acceptable as long as it can be dispersed in the antifouling polypropylene resin composition of the present invention, and can exert an antimicrobial effect.

The amount of the antimicrobial agent blended may be determined ad libitum taking into consideration a desired antimicrobial effect, but is preferably greater than 0.4% by mass and not greater than 2.0% by mass relative to the total amount of the composition. Although the antimicrobial agent can exert an antimicrobial effect even in an amount of about 0.2% by mass in general, according to the present inventor's investigation, it was revealed that an antimicrobial effect is less likely to be exerted in the system of the present invention in which a silicone oil was blended. Therefore, the amount is preferably greater than 0.4% by mass, and more preferably not less than 0.8% by mass. To the contrary, since the antifouling effect tends to be inhibited when the amount of the antimicrobial agent is too great, the amount is preferably not greater than 2.0% by mass.

In addition, the antifouling polypropylene resin composition of the present invention may further contain a nonreactive silicone oil. Examples of the nonreactive silicone oil include: straight silicone oils such as a dimethyl silicone oil and a methylphenyl silicone oil; and nonreactive modified silicone oils such as polyether modified silicone oils, a methylstyryl modified silicone oil, alkyl modified silicone oils, higher aliphatic acid ester modified silicone oils, hydrophilicity specifically modified silicone oils, higher aliphatic acid modified silicone oils and fluorine modified silicone oils. As described later, since removal of stains is facilitated by blending a nonreactive silicone oil, to obtain a polypropylene resin composition that is superior in the antifouling property is enabled. The amount of the nonreactive silicone oil blended may be determined ad libitum taking into consideration a desired antifouling effect, but is usually about 0.5 to 5% by mass relative to the total amount of the composition.

For producing the antifouling polypropylene resin composition of the present invention, each component may be mixed and then subjected to kneading. When a polypropylene resin composition in which the polar group-containing silicone oil and the compatibilizing agent are included in the state being bound by a chemical reaction is produced, a method of allowing the polar group-containing silicone oil to react with the compatibilizing agent beforehand and then kneading the reactant with a polypropylene resin, or a method of allowing a chemical reaction of the polar group-containing silicone oil with the compatibilizing agent to proceed during mixing and kneading the polypropylene resin, the polar group-containing silicone oil and the compatibilizing agent may be adopted. In light of convenience of the process, the latter method is preferred.

When a polypropylene resin composition containing the silicone oil also in an unreacted state is to be produced, the polar group-containing silicone oil or the nonreactive silicone oil in an excess amount relative to the compatibilizing agent may be blended. In light of convenience of the process, the latter is preferred.

The kneading method is not particularly limited. For example, a pellet constituted with an antifouling polypropylene resin composition can be produced by placing a compatibilizing agent pellet, the polar group-containing silicone oil and a polypropylene resin pellet in predetermined amounts into a biaxial extruder, and kneading the mixture. Thus resultant pellet may be either a masterbatch containing the polar group-containing silicone oil at a high content, or a compound which can be directly used in molding.

### Embodiment 1

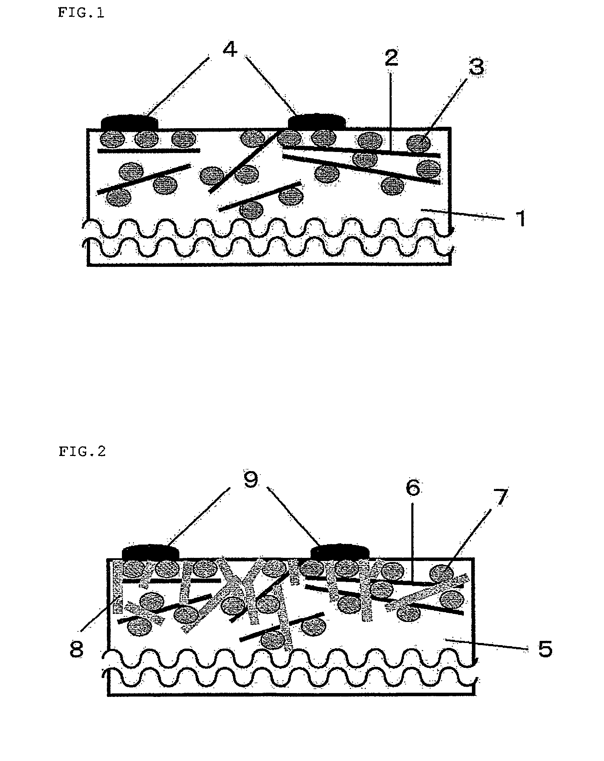

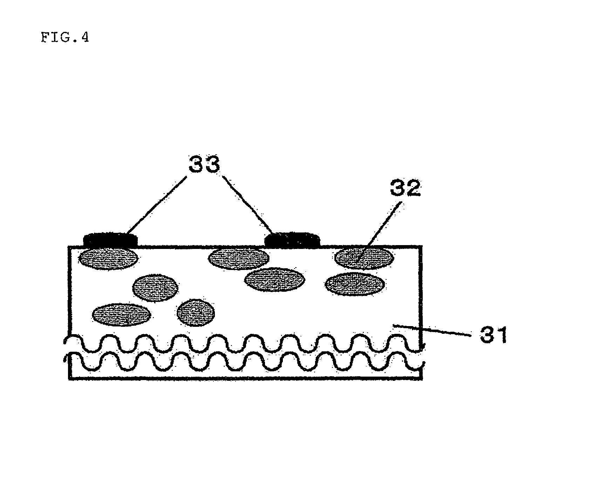

Fig. 4 shows a schematic cross-sectional view illustrating Comparative Example in which a polar group-containing silicone oil 32 was added to a polypropylene resin 31; and Fig. 1 shows a schematic cross-sectional view illustrating an antifouling polypropylene resin composition in the first Embodiment of the present invention. The antifouling polypropylene resin composition shown in Fig. 1 is prepared by allowing a modified polypropylene resin 2 as a compatibilizing agent and a silicone oil 3 having a polar group to be dispersed in a polypropylene resin 1. To a part of the modified polypropylene resin 2 is bound the polar group-containing silicone oil 3 by a chemical reaction. According to the present embodiment, substantially all molecules of the polar group-containing silicone oil 3 are bound to the modified polypropylene resin 2. In the vicinity of the surface of the antifouling polypropylene resin composition shown in Fig. 1, the polar group-containing silicone oil 3 bound to the modified polypropylene resin 2 is dispersed more finely as compared with the polar group-containing silicone oil 32 in Comparative Example shown in Fig. 4 because fine dispersion of the polar group-containing silicone oil 3 in the polypropylene resin 1 was enabled due to the binding of each molecule of the polar group-containing silicone oil 3 to the modified polypropylene resin. It is to be noted that the modified polypropylene resin 2 is schematically shown in the Figure, and it does not necessarily have a linear shape in fact as shown in the Figure and also the length is not limited to that shown in the Figure. Similarly, the polar group-containing silicone oils 3 and 32 are shown to have an elliptic shape, the shape and the size are not limited to those shown in the Figures.

Now, the antifouling property is described. The term antifouling" as herein referred to means: making a stain less likely to be attached which was generated by dissolving or dispersing a solid in water, alcohol, oil, an organic solvent or the like; making an attached stain more likely to be removed; or making a dry stain more likely to be removed which was generated by drying of the liquid to result in deposition of the dissolved or dispersed solid. Examples of such stains include stains derived from foods such as coffee, tea, bean paste soup, oils, soy sauce, dressings, vegetable juice and fruit juice, stains due to felt pen, paint and the like, stains due to feces, urine and mud, and the like. The antifouling polypropylene resin composition of the present invention exhibits a superior antifouling effect against such stains, and a particularly superior effect is exerted when the aforementioned dry stain is wiped off by dry wiping.

A principle of antifouling according to the antifouling polypropylene resin composition of the present invention is to utilize water repellency and oil repellency of a silicone component. The silicone component has greater water repellency and oil repellency as compared with polypropylene resins, and thus repels water, alcohols, oils, as well as organic solvents and the like. Therefore, the stain becomes less likely to be attached, and also the attached stain is likely to be removed. In addition, with respect to the stain generated by drying of the liquid included in the stain to result in attachment of the dissolved or dispersed solid, binding force is weakened when the composition is water repellent in the case in which the solid content is an inorganic substance, whereas binding force is also weakened when the composition is oil repellent in the case in which the solid content is an organic substance, leading to the attached solid more likely to be removed. Since the polypropylene resin does not favorably admix with the polar group-containing silicone oil, the polar group-containing silicone oil exists in the form of blocks having a certain size in the polypropylene resin as shown in Fig. 4. Therefore, large intervals are brought among the blocks of the polar group-containing silicone oil. Thus, although stains 33 attached to the places where the polar group-containing silicone oil 32 is present on the surface of the polypropylene resin composition can be easily removed, the stains 33 attached to the places where the polar group-containing silicone oil 32 is not present can be removed only to almost the same degree as the case of conventional polypropylene resins. On the other hand, the antifouling polypropylene resin composition of the present invention improves dispersibility of the polar group-containing silicone oil 3 by intermediation of modified polypropylene 2 employed as a compatibilizing agent between the polypropylene resin 1 and the polar group-containing silicone oil 3. Namely, still finer dispersion is enabled as shown in Fig. 1, in comparison with Fig. 4. Therefore, the intervals among the blocks of the polar group-containing silicone oil become smaller, and thus the polar group-containing silicone oil is allowed to be present below the attached stain 4, leading to improvement of the antifouling property.

From the foregoing, it is clear that the antifouling polypropylene resin composition of the present embodiment has superior antifouling effects of making stains derived from foods such as coffee, tea and bean paste soup, stains due to felt pen, paint and the like, stains due to feces and urine, and the like to be less likely to be adhered, and making the stain more likely to be removed even when attached and dried, and the like. Therefore, it can be used for housings of household electric appliances such as rice cookers and jar pots, or a variety of products and parts made from polypropylene such as toilet seats for which antifouling effects are desired.

### Embodiment 2

Fig. 2 shows a schematic cross-sectional view illustrating the antifouling polypropylene resin composition in the second Embodiment of the present invention. The antifouling polypropylene resin composition shown in Fig. 2 is prepared by allowing a modified polypropylene resin 6 as a compatibilizing agent and a silicone oil 7 having a polar group to be dispersed in a polypropylene resin 5. Furthermore, an unreacted polar group-containing silicone oil 8 will be present in the polypropylene resin 5 by adding the polar group-containing silicone oil 7 in an excess amount of the reaction equivalent with the amount of the modified polypropylene resin 6. Since silicone oil is likely to admix with each other, the unreacted polar group-containing silicone oil 8 will be present such that gaps of the polar group-containing silicone oil 7 reacted with the modified polypropylene resin 6 are filled.

Comparative effects thereto can be also achieved by a method in which a nonreactive silicone oil is added. The silicone oil for use in this attempt may not be necessarily a polar group-containing silicone oil, but a straight type silicone oil is acceptable. In this attempt, the unreacted polar group-containing silicone oil 8 shown in the Figure may be regarded as the nonreactive silicone oil. Although the unreacted polar group-containing silicone oil 8 is depicted with a straight line in Fig. 2, the shape and the size are not limited thereto. Accordingly, the proportion of the surface of the antifouling polypropylene resin composition covered with the silicone oil further increases, and thus the stains 9 is more likely to be removed; therefore, an antifouling polypropylene resin composition having a higher degree of antifouling property than that of the antifouling polypropylene resin composition in Embodiment 1 can be provided.

In the present embodiment, the amount of the unreacted polar group-containing silicone oil or the nonreactive silicone oil is generally about 0.5 to 5% by mass relative to the total amount of the composition, and is preferably about half of the total amount of the blended silicone oil.

According to the present embodiment, abrasion resistance with regard to the antifouling property can be also improved. Upon wiping off the stain attached to the surface of an antifouling polypropylene resin composition with a wiper such as a cloth, swabbing cloth, towel or paper, the wiper may scrape also the unreacted polar group-containing silicone oil 8 or the polar group-containing silicone oil 7 present at a place where the stain is not attached on the surface of the antifouling polypropylene resin composition, when both the stain and the wiper have got dried, leading to stripping off of the silicone oil. However, even though stripped off, the unreacted polar group-containing silicone oil 8 bleeds out from inside the antifouling polypropylene resin composition toward the surface. Therefore, the surface is covered again with the polar group-containing silicone oil to recover the antifouling property. Accordingly, improvement of the abrasion resistance is enabled.
From the foregoing, the antifouling polypropylene resin composition of the present embodiment has superior antifouling effects of making the stains derived from foods such as coffee, tea and bean paste soup, stains due to felt pen, paint and the like, stains due to feces and urine, and the like to be less likely to be adhered, and making the stain more likely to be removed even when attached and dried, and the like. Therefore, it can be used for housings of household electric appliances such as rice cookers and jar pots, or a variety of products and parts made from polypropylene such as toilet seats for which antifouling effects are desired.

### Embodiment 3

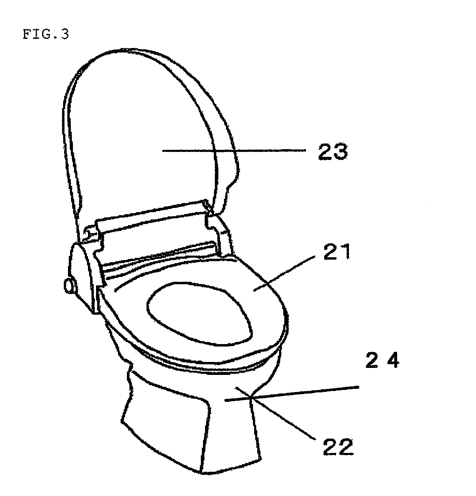

Fig. 3 shows a schematic outline view illustrating a western-style toilet in the third Embodiment of the present invention. The western-style toilet is composed of a lavatory bowl 22, and a toilet seat to be provided on the lavatory bowl 22. The toilet seat is composed of a toilet seat part 21 for seating by the user, a toilet lid 23 enabling opening and closing on the toilet seat part 21, and a main body portion 24 equipped with the toilet seat part 21 and the toilet lid 23. The toilet seat may be a warm water cleaning toilet seat. In this case, a water supply line (not shown in the Figure) for getting supply of water for cleaning from a water service pipe, and an electric cable (not shown in the Figure) for getting electric power from an electric outlet on the wall are provided.

The toilet seat part 21 is often made from a polypropylene resin so as to be capable of enduring the load from the user, and to be resistant against toilet cleaners containing acid, alkali, alcohol or the like. Although the polypropylene resin is superior in the antifouling property in general, it is disadvantageous in that fat and oil components are well penetrated thereinto. Therefore, when urine and stools and the like are attached to the toilet seat part 21, particularly on the back side hardly noticeable ordinarily, the fats and oil components of them are penetrated to cause yellow staining. Additionally, when such stains are dried, a problem of difficulty in removing by dry wiping also occurs.
In the present Embodiment, the antifouling polypropylene resin composition of Embodiment 2 was used. Specifically, 1% by mass of a maleic anhydride modified polypropylene resin, 5% by mass of a side chain type amino modified silicone oil, and a polypropylene resin were kneaded in a biaxial extruder to produce a compound, which was molded with an injection molding machine to manufacture a toilet seat part in which the antifouling polypropylene resin composition was used. It is to be noted that since the side chain type amino modified silicone oil used had a functional group equivalent of 2,700, and the maleic anhydride modified polypropylene used had an acid value of 52, granted that reaction of all reactive sites is perfected, the unreacted modified silicone oil is estimated to be about 2.5% by mass.

Next, the antifouling property is described. When a user sits on the toilet seat part 21 and excretes urine or feces, the splashing attaches onto the back of the toilet seat part 21. Additionally, in the case of a warm water cleaning toilet seat, warm water containing the stool may be attached onto the back of the toilet seat part 21 upon cleaning of the soiled portion after the excretion. However, since the silicone component is water repellent, it makes the stain less likely to be adhered, and can prevent wet spreading even though the stain is adhered. Therefore, readily wiping off with toilet tissue paper is enabled in this state. In addition, since the back side of the toilet seat part 21 is less visible, such a stain is likely to be left to stand to dryness and may be stuck on the toilet seat part 21. Also in such a case, since penetration of fat and oil components can be avoided and the binding force between the silicone oil and the stain is weaker, the stain can be readily removed by dry sweeping with toilet tissue paper, or with wet swabbing cloth or the like. Furthermore, by containing the silicone oil and the modified polypropylene resin in combination, the antifouling polypropylene resin composition will have a nearly rubbery state to enable preventing scratching of the toilet seat part 21. In particular, the upper surface of the toilet seat part 21 is likely to be scratched since the users wipe with toilet tissue paper before use, or a belt and the like may hit thereon, but such scratching can be prevented by the antifouling polypropylene resin composition of the present invention. Therefore, invasion of the stain into scratches can be provided, while making the stain less likely to be adhered, and making the stain more likely to be removed even when adhered. Although the mechanism by which the polypropylene resin has a nearly rubbery state is unknown, it is presumed that addition of the modified polypropylene resin, the polar group-containing silicone oil and the like may probably result in lowering of the crystallinity of polypropylene, or these additives may serve like a lubricant in the polypropylene resin.

Moreover, by containing an antimicrobial agent in the antifouling polypropylene resin composition, a toilet seat having an antimicrobial property and the antifouling property in combination can be provided.

In the present Embodiment, an antifouling property is described only with regard to the toilet seat part for western-style toilet, but the antifouling polypropylene resin composition of the present invention is applicable also to molded products such as the main body portion of the warm water cleaning toilet seat, the back face of the main body (not shown in the Figure), the lavatory bowl 22, the toilet lid 23, a remote control device for controlling the warm water cleaning toilet seat (not shown in the Figure), and a nozzles that squirts water for cleaning (not shown in the Figure). Particularly, when applied to a nozzle that squirts water for cleaning which is difficult to subject to maintenance by human hand, cleaning of the stain attached to the nozzle after every use with less quantity of water flow is enabled, and thus nozzles having enhanced cleanliness can be provided.

Thus manufactured toilet seat for western-style toilet has a superior antifouling effects such as making the stain due to feces, urine and the like less likely to be adhered, making the stain more likely to be removed even though adhered and dried, and the like.

### [EXAMPLES]

Hereinafter, the present invention is explained in more detail by way of Examples, but the present invention is not limited to these Examples.

### Method for Manufacturing Molded Product

A polypropylene resin used as a base resin was a commercially available product having a high crystalline grade. Into this polypropylene resin was blended each component shown in Table 1 at a composition ratio shown in Table 1, and kneading was carried out using a general kneading machine, followed by injection molding using a general injection molding machine to produce a molded product (pellet) of the antifouling polypropylene resin composition having a size of 87 mm x 47 mm x 2.5 mm (in thickness). The composition ratio shown in Table 1 is represented by the concentration in finally obtained composition.

As each component shown in Table 1, the following each commercially available product was used.

Polar group-containing silicone oil: side chain type amino modified silicone oil having a functional group equivalent of 2,700

Modified polypropylene: maleic anhydride modified polypropylene having an acid value of 52

Silicone concentrate: "Silicone Concentrate (Part No.: BY27-001)" manufactured by Dow Corning Toray Co., Ltd. (mixture of a polypropylene resin with a ultrahigh molecular weight silicone polymer that is a silicone resin) commercially available as an antifouling polypropylene resin masterbatch

Clinbell: antifouling agent "Clinbell (Part No.: CB-50PP)" manufactured by Fuji Chemical Industries, Ltd. (mixture of a silicone resin and a polypropylene resin) commercially available as an antifouling polypropylene resin masterbatch

### Evaluation of Antifouling Performance against Stain Derived From Food

Using each molded product obtained as described above, the antifouling performance was evaluated according to the following evaluation standards. The results are shown in Table 1.

### (1) Production of Stain

Instant coffee "trade name: NESCAFE Excella" manufactured by Nestle Japan Ltd. in an amount of 1 g was homogenously dispersed in water to prepare 500 g of coffee, and each one drop was dropped on a PP resin piece using a 2-ml dropping pipette, followed by drying at 40°C for 60 min to allow to be stuck.

### (2) Method of Evaluating Antifouling Performance

After thus produced stain was wiped using dry paper (manufactured by Nippon Paper Industries CRECIA Co., LTD., Kimwipe) under conditions of "load of 1 kg, 10-times back and forth operation" and "load of 3 kg, 30-times back and forth operation", the state of stain was visually observed, and scored depending on the state as in the following:
the stain removed almost completely; 2.0 points
a greater part of the stain removed (contour of the stain remained to some extent); 1.5 points
more than about half of the stain removed; 1.0 point a part of the stain removed; 0.5 points
the stain remained almost completely; 0 point.

Then, total value (full score: 4 points) of the average point derived under "load of 1 kg, 10-times back and forth operation" and the average point derived under "load of 3 kg, 30-times back and forth operation" was defined as "antifouling index" to decide evaluation of the antifouling performance.

**Table 1**

| | Polar group- containing silicone oil (% by mass) | Modified polypropylene (% by mass) | Silicone concentrate (% by mass) | Clinbell (% by mass) | Anti-fouling index |
|---|---|---|---|---|---|
| Example 1 | 5.0 | 1.0 | - | - | 3.6 |
| Example 2 | 7.5 | 1.0 | - | - | 2.8 |
| Example 3 | 3.5 | 0.7 | - | - | 2.9 |
| Example 4 | 2.5 | 0.5 | - | - | 2.3 |
| Example 5 | 2.0 | 0.4 | - | - | 2.3 |
| Example 6 | 5.0 | 1.0 | 5.0 | - | 3.2 |
| Example 7 | 7.5 | 1.0 | 2.5 | - | 2.2 |
| Comparative Example 1 | - | - | - | - | 0.0 |
| Comparative Example 2 | - | - | - | 10.0 | 0.0 |
| Comparative Example 3 | - | - | 10.0 | - | 1.0 |
| Comparative Example 4 | 2.5 | - | - | - | 0.3 |
| Comparative Example 5 | 5.0 | - | - | - | 2.0 |
| Comparative Example 6 | 7.5 | - | - | - | 2.0 |

From Table 1, it is proven that the composition of the present invention produced by blending a polar group-containing silicone oil and a modified polypropylene resin with a polypropylene resin achieves a high degree of antifouling performance.

### Evaluation of Antifouling Performance against Urinal Stain

Next, the polypropylene resin molded products of Example 1 and Comparative Example 1 were evaluated on an antifouling property against urinal stain according to the following procedures. The urinal stain was produced on the surface of the polypropylene resin molded product using synthetic urine (Lyphochek® urine control for quantitative determination (normal) manufactured by Bio-Rad Laboratories, Inc.). Although the process for preparing synthetic urine was as in the manufacture's protocol, synthetic urine having a concentration two times greater than that described in the protocol was prepared. Artificial urinal stains were produced by dropping each one drop of the synthetic urine with a 2-mL dropping pipette onto six spots of each molded product, and thereafter drying at 40°C for 60 min to allow to be stuck.

Thus produced stain was wiped using dry paper (manufactured by Nippon Paper Industries CRECIA Co., LTD., Kimwipe) and a wet sheet for cleaning (manufactured by Kao Corporation, Toilet Quickle), and visually observed on the degree of removal of the stain after the wiping. Note that wiping was carried out with back and forth operation of five times under a load of 500 g when the dry paper was used, whereas the back and forth operation of one time under a load of 300 g was carried out when the wet sheet for cleaning was used.

In both cases in which either of such paper was used, removal of the stain failed on the molded product of Comparative Example 1, but complete removal of the stain was enabled on the molded product of Example 1.

### Evaluation of Abrasion Resistance

Next, abrasion resistance was evaluated on the molded product of Example 1 according to the following evaluation standards.

The abrasion test was performed by carrying out back and forth operation of predetermined times under a load of 700 g using a sheet for cleaning (manufactured by Kao Corporation, Toilet Quickle) on the surface of the molded product. The number of times of the back and forth operation was predetermined according to a stress mode provided on the inventor's accord. According to this mode, cleaning carried out 1.4 times per week, with two-times back and forth operation in one cleaning results in wiping of about 150-times back and forth operation per year, and thus accounting for wiping of about 1,500-times back and forth operation in ten years. Thereafter, the test for evaluation of the antifouling performance was performed similarly to the aforementioned procedures to determine the antifouling index.

Although the antifouling index before the abrasion test was 3.6 as shown in Table 1, the antifouling index of 2.5 was found to be maintained even after performing the abrasion test. Therefore, the molded product of Example 1 was revealed to have sufficient abrasion resistance.

### Evaluation of Antimicrobial Activity

A silver based inorganic antimicrobial agent "Novaron" (registered trademark) manufactured by Toa Gosei Co., Ltd. was blended into the pellet obtained in Example 1 in amounts shown in Table 2, and thereafter the mixture was molded into a plate form. Each of thus obtained plate was evaluated on an antimicrobial activity according to the following test method and conditions. The results are shown in Table 2.

Test method: film adhesion method defined in JIS Z 2801 (edited in 2000)
Bacterial strain used: E. coli (Escherichia coli) NBRC3972, and S. aureus (Staphylococcus aureus) NBRC12732
Conditions of bacterial liquid: 1/500 NB 0.4 mL
Operation conditions: 35°C, for 24 hours
Coating film: 4 cm x 4 cm
The compatibility shown in Table 2 means compatibility in terms of the definition of an antimicrobial effect (value of antimicrobial activity: not less than 2.0) of antimicrobial finished products, as defined in JIS Z 2801.

**Table 2**

| Amount of blended antimicrobial agent (% by mass) | E. Coli | | S. aureus | | Compatibility |
|---|---|---|---|---|---|
| | viable bacteria count | Value of antimicrobial activity | viable bacteria count | Value of antimicrobial activity | |
| 0 (blank) | 1.7×10⁷ | - | 3.0×10⁵ | - | - |
| 0.4 | 1.5×10⁶ | 1.1 | 1.1×10⁴ | 1.4 | incompatible |
| 0.8 | 1.1×10¹ | 6.2 | 1.7×10² | 3.3 | compatible |
| 1.2 | 1.1×10¹ | 6.2 | 1.0×10¹ | 4.5 | compatible |
| Control group immediately after inoculation | 3.4×10⁵ | - | 4.0×10⁵ | - | - |
| Control group | 1.6×10⁷ | - | 3.5×10⁵ | - | - |

From Table 2, it is proven that the addition of an antimicrobial agent in an amount greater than 0.4% relative to the total amount of the composition is necessary in order to accomplish a sufficient antimicrobial activity by blending the antimicrobial agent into the antifouling polypropylene resin composition of the present invention.

### [Industrial Applicability]

When the antifouling polypropylene resin composition according to the present invention is used, rice cookers, electric water heaters, toilet seats and the like having superior antifouling property can be provided. Alternatively, antifouling properties can be imparted not only to household electric appliances but also to parts for automobiles such as bumpers.

## Claims

1. An antifouling polypropylene resin composition comprising:
a polypropylene resin;
a silicone oil having a polar group; and
a compatibilizing agent that improves compatibility between the silicone oil having the polar group and the polypropylene resin, wherein
the silicone oil having the polar group is dispersed in the polypropylene resin,
the blend ratio of the silicone oil having the polar group to the compatibilizing agent is 2.5:1 to 7.5:1 by mass ratio.

2. The antifouling polypropylene resin composition according to claim 1, wherein the compatibilizing agent is a modified polypropylene resin.

3. The antifouling polypropylene resin composition according to claim 1, wherein
the silicone oil having the polar group is an amino modified silicone oil, and
the compatibilizing agent is an acid modified polypropylene resin, and wherein
said two components are included in a state bound by a chemical reaction with one another in the antifouling polypropylene resin composition, and the amino modified silicone oil is also included in an unreacted state.

4. The antifouling polypropylene resin composition according to claim 3, wherein the acid modified polypropylene resin is a carboxylic anhydride modified polypropylene resin.

5. The antifouling polypropylene resin composition according to claim 3 or 4, wherein the amino modified silicone oil is a side chain type amino modified silicone oil.

6. The antifouling polypropylene resin composition according to any one of claims 1 to 5, further comprising an antimicrobial agent.

7. A housing for a household electric appliance comprising an area manufactured by molding with the antifouling polypropylene resin composition according to any one of claims 1 to 6.

8. A toilet seat comprising an area manufactured by molding with the antifouling polypropylene resin composition according to any one of claims 1 to 6.

## Patentansprüche

1. Fleckenverhindernde Polypropylenharzzusammensetzung, umfassend:
ein Polypropylenharz;
ein Silikonöl, welches eine polare Gruppe aufweist; und
ein kompatibilisierendes Mittel, welches die Kompatibilität zwischen dem Silikonöl,
welches die polare Gruppe aufweist, und dem Polypropylenharz verbessert, wobei das Silikonöl, welches die polare Gruppe aufweist, in dem Polypropylenharz dispergiert ist,
das Mischungsverhältnis zwischen dem Silikonöl, welches die polare Gruppe aufweist,
und dem kompatibilisierenden Mittel bezogen auf das Massenverhältnis 2,5:1 bis 7,5:1 ist.

2. Fleckenverhindernde Polypropylenharzzusammensetzung nach Anspruch 1, wobei das kompatibilisierende Mittel ein modifiziertes Polypropylenharz ist.

3. Fleckenverhindernde Polypropylenharzzusammensetzung nach Anspruch 1, wobei das Silikonöl, welches die polare Gruppe aufweist, ein aminomodifiziertes Silikonöl ist,
und
das kompatibilisierende Mittel ein säuremodifiziertes Polypropylenharz ist, und wobei die zwei genannten Komponenten in einem Zustand beinhaltet sind, in dem sie mittels einer chemischen Reaktion miteinander in der fleckenverhindernden Polypropylenharzzusammensetzung gebunden sind, und das aminomodifzierte Silikonöl auch in einem unreagierten Zustand beinhaltet ist.

4. Fleckenverhindernde Polypropylenharzzusammensetzung nach Anspruch 3, wobei das säuremodifizierte Polypropylenharz ein Carbonsäure-Anhydrid modifiziertes Polypropylenharz ist.

5. Fleckenverhindernde Polypropylenharzzusammensetzung nach Anspruch 3 oder 4, wobei das aminomodifizierte Silikonöl ein aminomodifiziertes Silikonöl des Seitenkettentyps ist.

6. Fleckenverhindernde Polypropylenharzzusammensetzung nach einem der Ansprüche 1 bis 5, ferner umfassend ein antimikrobielles Mittel.

7. Gehäuse für eine Haushaltselektroanwendung, umfassend einen Bereich, der durch Gießen mit der fleckenverhindernden Polypropylenharzzusammensetzung nach einem der Ansprüche 1 bis 6 hergestellt ist.

8. Toilettensitz umfassend einen Bereich, der durch Gießen mit der fleckenverhindernden Polypropylenharzzusammensetzung nach einem der Ansprüche 1 bis 6 hergestellt ist.

## Revendications

1. Composition de résine de polypropylène antisalissure comprenant :
une résine de polypropylène ;
une huile de silicone ayant un groupe polaire ; et
un agent compatibilisant qui améliore la compatibilité entre l'huile de silicone ayant le groupe polaire et la résine de polypropylène, où
l'huile de silicone ayant le groupe polaire est dispersée dans la résine de polypropylène,
le rapport de mélange de l'huile de silicone ayant le groupe polaire à l'agent compatibilisant est 2,5 : 1 à 7,5 : 1 en rapport massique.

2. Composition de résine de polypropylène antisalissure selon la revendication 1 où l'agent compatibilisant est une résine de polypropylène modifiée.

3. Composition de résine de polypropylène antisalissure selon la revendication 1 où
l'huile de silicone ayant le groupe polaire est une huile de silicone modifiée par amino, et
l'agent compatibilisant est une résine de polypropylène modifiée par un acide, et où
lesdits deux composants sont inclus dans un état lié par une réaction chimique l'un avec l'autre dans la composition de résine de polypropylène antisalissure, et l'huile de silicone modifiée par amino est incluse aussi dans un état qui n'a pas réagi.

4. Composition de résine de polypropylène antisalissure selon la revendication 3 où la résine de polypropylène modifiée par un acide est une résine de polypropylène modifiée par un anhydride carboxylique.

5. Composition de résine de polypropylène antisalissure selon la revendication 3 ou 4 où l'huile de silicone modifiée par amino est une huile de silicone modifiée par amino de type chaîne latérale.

6. Composition de résine de polypropylène antisalissure selon l'une quelconque des revendications 1 à 5 comprenant en outre un agent antimicrobien.

7. Boîtier pour un appareil électrique ménager comprenant un domaine fabriqué par moulage avec la composition de résine de polypropylène antisalissure selon l'une quelconque des revendications 1 à 6.

8. Siège de toilette comprenant un domaine fabriqué par moulage avec la composition de résine de polypropylène antisalissure selon l'une quelconque des revendications 1 à 6.
